(19) Europäisches Patentamt
European Patent Office
Office européen des brevets

(11) **EP 4 521 681 A1**

(12) **EUROPEAN PATENT APPLICATION**

(43) Date of publication:
**12.03.2025 Bulletin 2025/11**

(21) Application number: **24161763.8**

(22) Date of filing: **06.03.2024**

(51) International Patent Classification (IPC):
***H04L 9/30*** *(2006.01)* ***H04L 9/32*** *(2006.01)*

(52) Cooperative Patent Classification (CPC):
**H04L 9/3093; H04L 9/3247**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **08.09.2023 EP 23196281**

(71) Applicant: **Siemens Aktiengesellschaft**
**80333 München (DE)**

(72) Inventors:
- **Bauer, Sven**
  **85591 Vaterstetten (DE)**
- **De Santis, Fabrizio**
  **80634 München (DE)**

(74) Representative: **Siemens Patent Attorneys**
**Postfach 22 16 34**
**80506 München (DE)**

(54) **METHOD FOR SIGNATURE VERIFICATION OF A DILITHIUM SIGNATURE**

(57) The method for signature verification of a Dilithium signature comprises the steps of
- considering a message with a Dilithium signature with a scalar signature component and two vectorial signature components,
- considering a public Dilithium key, that corresponds to the Dilithium signature, with a matrix public key component and a vectorial public key component
- in which an
evaluation of a difference of a product of the matrix public key component and one of the vectorial signature components and a product of a scalar quantity, depending on the scalar signature component, and the vectorial public key component is substituted by an
evaluation of a difference of a sum of the product of the matrix public key component and the one of the vectorial signature components and a further summand in form of a random vector and a sum of the product of the scalar quantity and the vectorial public key component and the further summand.

The devices are configured to carry out the above-mentioned methods.

TABLE I: Parameters of DILITHIUM signature verification

| NIST security level | 2 | 3 | 5 |
|---|---|---|---|
| $\gamma_1$ | $2^{17}$ | $2^{19}$ | $2^{19}$ |
| $\gamma_2$ | $(q-1)/88$ | $(q-1)/32$ | $(q-1)/32$ |
| $(k, l)$ | $(4, 4)$ | $(6, 5)$ | $(8, 7)$ |
| $\beta$ | 78 | 196 | 120 |
| $\omega$ | 80 | 55 | 75 |

Fig. 1 (State of the art)

**Description**

The invention relates to a method for signature verification of a Dilithium signature and to a computer program product and a device configured to carry out this method.

Embedded devices rely heavily on the verification of digital signatures to ensure the authenticity and integrity of data. During the boot process, the device verifies the digital signature of the firmware to ensure that it has not been tampered with or modified. Similarly, software updates are also verified using digital signatures to ensure that only authorized and unaltered software is installed.

Moreover, digital signatures are also used to verify the authenticity of a communication party. When two devices communicate with each other, they exchange digital certificates that include digital signatures. These signatures are then verified to confirm that both parties are authentic and have not been impersonated.

However, if an attacker manages to bypass or compromise the signature verification process, they can inject malicious code into the device or impersonate a legitimate communication party. This can lead to severe consequences, including data breaches, financial losses, and reputation damage. Therefore, it is crucial to ensure that signature verification is implemented securely and robustly in embedded devices.

In July 2022, the U.S. Department of Commerce's National Institute for Standard and Technology (NIST) selected three algorithms $D_{ILITHIUM}$ [2], $F_{ALCON}$ [3] and $S_{PHINCS}+$ [4] for digital signatures as a replacement for RSA and elliptic curve based digital signatures [5]. In particular, $D_{ILITHIUM}$ is a good candidate for general purpose applications, because it offers smaller signatures than $S_{PHINCS}+$.

However, there may be non-obvious attacks for $D_{ILITHIUM}$ verification routines that developers are likely to overlook. Consequently, these vulnerabilities may not be adequately protected by appropriate countermeasures in practice. This is especially important for post-quantum signature schemes, as they are relatively new and may not have been subject to the same level of scrutiny as more established schemes. By identifying and testing these attack vectors, we can help improve the security of these schemes and prevent potential attacks in the future.

Hence, in this context, it is the problem of the invention to provide an improved method for signature verification of a Dilithium signature. In particular, this method is desired to be less affected by malicious attacks. Furthermore, it is a problem of the invention to provide devices which are configured to carry out this method.

This problem of the invention is solved by a method with the features as claimed in claim 1 and by a device as claimed in claim 5.

Preferred aspects of the invention are contained in the respective dependent claims, the subsequent description and the drawing.

The method for signature verification of a Dilithium signature according to the invention comprises the steps of

- considering a message with a Dilithium signature with a scalar signature component and two vectorial signature components,
- considering a public Dilithium key, that corresponds to the Dilithium signature, with a matrix public key component and a vectorial public key component
- in which an

evaluation of a difference of a product of the matrix public key component and one of the vectorial signature components and a product of a scalar quantity, depending on the scalar signature component, and the vectorial public key component is substituted by an

evaluation of a difference of a sum of the product of the matrix public key component and the one of the vectorial signature components and a further summand in form of a random vector and a sum of the product of the scalar quantity and the vectorial public key component and the further summand in form of the random vector.

Advantageously, the previously described method for signature verification of a Dilithium signature according to the invention is less affected by fault injection attacks compared to previously known methods.

The evaluation of the difference of a difference of a product of the matrix public key component and one of the vectorial signature components with a product of a scalar quantity, depending on the scalar signature component, and the vectorial public key component may be subject to a fault injection attack such, that the evaluation of the difference is stopped and the subtraction of the product of the scalar quantity, depending on the scalar signature component, and the vectorial public key component is omitted. With such an attack, the verification of a malicious Dilithium signature may be erroneously carried out. In the invention, however, the addition of the random vector would distort the calculation if the evaluation of the difference is stopped and the minuend is not decreased by the subtrahend. Since to both the minuend and the subtrahend in the aforementioned difference, the same random vector is added in the method according to the invention, the random vector cancels out of the calculation if the difference is evaluated without injection attacks. In the case of an injection attack, that prohibits the subtraction of the subtrahend, the random vector does not cancel out. This leads to the inability to verify malicious Dilithium signatures with such an attack. Thus, according to the invention, the method for signature verification is more robust agains fault injection attacks and thus improved.

Preferably, in the method according to the invention, the random vector is a pseudo-random vector.

Alternatively, and also preferably, in the method according to the invention, the random vector is a physically derived, preferably a noise-based or noise-derived, random vector.

The computer program product according to the invention comprises a program commands, that, when run on a computer, are configured to carry out the method according to the invention as described previously.

The device according to the invention comprises a processor, preferably a microprocessor, and is configured to carry out the method according to the invention as described above.

In a preferable and optional aspect of the invention, the device is an embedded device.

In an advantageous and optional aspect of the invention, the device is a manufacturing device and/or a logistics device and/or an Internet-of-things device, preferably an industrial-internet-of-things device.

In the following, specific embodiments for carrying out the invention are described.

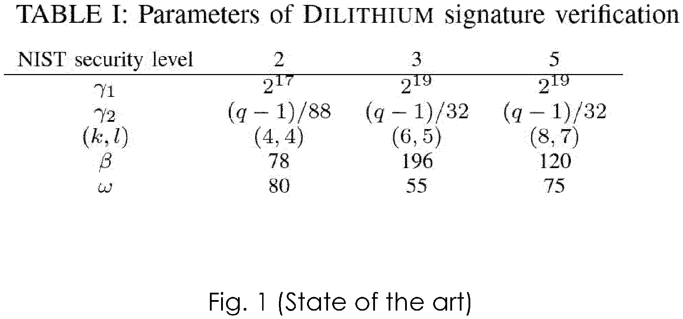

Fig. 1 shows relevant parameters as typically chosen in the state of the art and as referred to in the text by table I.

This application shows as examples a number of non-trivial, yet in practice simple and realistic fault injection attacks against the verification routines of the post-quantum signature schemes. $D_{ILITHIUM}$. The attacks target parts of the code which even an experienced developer would not necessarily consider protecting against, making it difficult to defend against such attacks. Consequently, an attacker can trick a device into processing arbitrary unauthenticated data, and hence possibly even into installing software supplied by the attacker. If signature verification during the establishment of a secure communication session is attacked, the attacker can force the device to communicate with an unauthenticated party.

In the following, a more detailed description of the $D_{ILITHIUM}$ signature scheme is provided. Subsequently, an attack against $D_{ILITHIUM}$ signature verification is shown. A practical evaluation of the proposed attacks is provided thereafter. Possible countermeasures to protect against the proposed fault attacks with the methods according to the invention are described subsequently.

DILITHIUM SIGNATURE VERIFICATION

We give a brief description of the $D_{ILITHIUM}$ signature verification procedure. For the full details of the $D_{ILITHIUM}$ signature scheme, we refer the reader to the DILITHIUM specification [2] . $D_{ILITHIUM}$ largely works over a ring

$$R_q = \mathbb{Z}_q[X]/(X^{156}+1)$$

with $q$ = 8380417. The specification defines a representation of elements of $\boldsymbol{R_q}$ as byte strings. Hence, we will, for example, apply hash functions to elements of $\boldsymbol{R_q}$, implicitly assuming the encoding defined in the specification. The exact definition of this encoding does not matter for the purposes of this application and can be found in [2] .

The specification [2] defines three variants, targeting NIST security levels 2, 3 and 5, respectively (see [16], section 4.A.5 for a definition of these security levels). Therefore, signature verification is parameterized. We give the values of the parameters for the three security levels in table I as depicted in fig. 1. The DILITHIUM specification lists more parameters, but we have only listed those which are relevant to signature verification.

A DILITHIUM public key is a pair $(\rho, \mathbf{t}_1) \in \{0,1\}^{256} \times R_q{}^l$.

There is a function $\text{ExpandA}: \{0,1\}^{256} \rightarrow R_q^{k \times l}$ : that is used to expand the bit string $\rho$ to a matrix $\mathbf{A} \in R_q^{k \times l}$. So $\rho$ is a compressed representation of A. A $D_{ILITHIUM}$ signature is a triple $(\bar{c}, \vec{z}, \vec{h}) \in \{0,1\}^{256} \times R_q^l \times \{0,1\}^{256k}$.

Please note, that in the frame of the present application, vectors may be either expressed as characters with an arrow above or equivalently as characters printed in bold. Thus, as an example, $\vec{z}$ and $\mathbf{z}$ will denote the same entity and these notations could be exchanged with each other.

The signature verification procedure also calls a subroutine SampleInBall that produces a pseudo-random 256-bit string with exactly $\tau$ bits equal to one from an input seed. Further, a function $\text{UseHint}_q$ is needed that takes as input a **256**-bit string (the "hint"), a vector in $R_q{}^k$ and an integer (the "loworder rounding range").

Algorithm 1 DILITHIUM. VERIFY ($m$, sig, pk)

Require: A message $m$ a signature sig=($\bar{c}$,**z**,**h**), a public key pk=($\rho$,**t**$_1$).
Ensure: Accept or reject

```
1:    A ← ExpandA(ρ)
2:    μ ← SHAKE256(SHAKE256(ρ‖t₁,256)‖M,512)
3:    c ← SampleInBall(c̃)
4:    w₁′ ← UseHint(h,Az− ct₁,2γ₂)
5:    if ‖z‖∞ < γ₁ − β and c̃ = SHAKE256(μ‖w₁,256) and the number of 1s in h
is ≤ ω then
6:         accept
7:    else
8:         reject
```

FAULT ATTACKS AGAINST DILITHIUM SIGNATURE VERIFICATION

We use the same notation as in the above description and assume the attacker has access to a valid $D_{ILITHIUM}$ public key $(\rho,t_1)$ and some message $m$ with a valid $D_{ILITHIUM}$ signature $\sigma = (\tilde{c},z,h)$ that can be verified with the public key $(\rho, t_1)$.

We assume further the attacker has physical access to a device that only accepts messages with signatures that can be verified under the public key $(\rho,t_1)$.

The attacker wants to force the device into accepting a message $m$' for which the attacker does not have a valid signature.

Our attack consists of two steps: First, the attacker constructs an invalid signature $\sigma$' for $m$' and then, using a fault injection, forces the device to accept this as a valid signature for $m$'. The point is, that $\sigma$' needs to be specifically crafted to make this fault injection attack practical.

To achieve this, the attacker proceeds as follows:

1) Calculate:

$$\mu' \leftarrow \text{SHAKE256}(\text{SHAKE256}((\rho\|t_1,256)\|M,512)) \tag{1}$$

This is the same step as in the verification procedure 2 when verifying a signature for $m$'.

2) Compute:

$$w_1'' := \text{UseHint}_q(h,Az,2\gamma_2) \tag{2}$$

This is the same step as in the verification procedure algorithm 1 in line 4 but with $c = 0$.

3) Compute:

$$\tilde{c}' := \text{SHAKE256}(\mu\|w_1'',256) \tag{3}$$

4) Let $\sigma$' := $(\tilde{c}', z,h)$ and send the message $m$'with the purported signature $\sigma$' to the device for verification. Note that the components $z$ and $h$ are taken from the genuine signature $\sigma$.

5) During the signature verification procedure on the device, the attacker injects a fault to suppress subtracting $ct_1$ in algorithm 1, line 4.

If the fault injection is successful, the device will compute the same value $w_1$" as the attacker in step 2 of the attack. Hence, the second part of the test in algorithm 1, line 4 becomes a test that $\tilde{c}'' = \text{SHAKE256}(\mu\|w_1'',256)$. This is of course correct. The other two parts of this test pass as well, because they are carried out on components $z$ and $h$ of a genuine signature. Therefore, the device will accept $\sigma$' as a valid signature for $m$'.

Of course, the critical step is the fault injection in step 5.

COUNTERMEASURES

Obviously, generic countermeasures against manipulation of the control flow, e.g., hardware instruction skip, make most of the attacks presented in this application more difficult to realize in practice.

However, there are also more specific countermeasures that can be implemented to thwart our attacks.

For instance, against the attack described before, one can proceed as follws:

The implementation generates a random $\mathbf{u} \in R_q^k$ then computes **Az+u** and $c\mathbf{t}_1\mathbf{+u}$. The attacked step in algorithm 1, line 4 then becomes

$$(\mathbf{Az} + \mathbf{u}) - (c\mathbf{t}_1 + \mathbf{u}). \qquad (7)$$

If the attacker skips this subtraction, then, with overwhelming probability, the value $\mathbf{w}_1'$ computed in algorithm 1, line 4 is not the value $\mathbf{w}_1''$ calculated by the attacker. Hence, signature verification will most likely fail.

Prior Art References

[1] J. A. Muir, "Seifert's RSA fault attack: Simplified analysis and generalizations," in ICICS 06, ser. LNCS, P. Ning, S. Qing, and N. Li, Eds., vol. 4307. Springer, Heidelberg, Dec. 2006, pp. 420-434.

[2] V. Lyubashevsky, L. Ducas, E. Kiltz, T. Lepoint, P. Schwabe, G. Seiler, D. Stehle, and S. Bai, "CRYSTALS-DILITHIUM," Na-' tional Institute of Standards and Technology, Tech. Rep., 2022, available at https://csrc.nist.gov/ Projects/post-quantum-cryptography/ selected-algorithms-2022.

[3] T. Prest, P.-A. Fouque, J. Hoffstein, P. Kirchner, V. Lyubashevsky, T. Pornin, T. Ricosset, G. Seiler, W. Whyte, and Z. Zhang, "FALCON," National Institute of Standards and Technology, Tech. Rep., 2022, available at https://csrc.nist. gov/Projects/post-quantum-cryptography/ selected-algorithms-2022.

[4] A. Hulsing, D. J. Bernstein, C. Dobraunig, M. Eichlseder, S. Fluhrer,¨ S.-L. Gazdag, P. Kampanakis, S. Kolbl, T. Lange, M. M. Lau-¨ ridsen, F. Mendel, R. Niederhagen, C. Rechberger, J. Rijneveld, P. Schwabe, J.-P. Aumasson, B. Westerbaan, and W. Beullens, "SPHINCS+," National Institute of Standards and Technology, Tech. Rep., 2022, available at https://csrc.nist.gov/Projects/post-quantumcryptography/selected-algorithms-2022.

[5] NIST, "NIST announces first four quantum-resistant cryptographic algorithms," https://www.nist.gov/news-events/ news/2022/07/nistannounces-first-four-quantum-resistant-cryptographic-algorithms, 2022, accessed 2022-12-21.

[6] N. Moro, K. Heydemann, E. Encrenaz, and B. Robisson, "Formal verification of a software countermeasure against instruction skip attacks," Cryptology ePrint Archive, Report 2013/679, 2013, https:// eprint.iacr.org/2013/679.

[7] J.-M. Dutertre, T. Riom, O. Potin, and J.-B. Rigaud, "Experimental analysis of the laser-induced instruction skip fault model," accessed 202305-03. [Online]. Available: https://hal.science/hal-02 37 97 54/document

[8] A. Menu, J.-M. Dutertre, O. Potin, J.-B. Rigaud, and J.-L. Danger, "Experimental analysis of the electromagnetic instruction skip fault model," accessed 2023-05-03. [Online]. Available: https: //hal.science/hal-02572398/document

[9] J.-P. Seifert, "On authenticated computing and rsa-based authentication," in Proceedings of the 12th ACM Conference on Computer and Communications Security, ser. CCS '05. New York, NY, USA: Association for Computing Machinery, 2005, p. 122-127. [Online]. Available: https://doi.org/10.1145/1102120.1102138

[10] L. G. Bruinderink and P. Pessl, "Differential fault attacks on deterministic lattice signatures," IACR TCHES, vol. 2018, no. 3, pp. 21-43, 2018, https://tches.iacr.org/index.php/TCHES/article/view/7267.

[11] S. McCarthy, J. Howe, N. Smyth, S. Brannigan, and M. O'Neill, "BEARZ attack FALCON: Implementation attacks with countermeasures on the FALCON signature scheme," Cryptology ePrint Archive, Report 2019/478, 2019, https:// eprint.iacr.org/2019/478.

[12] S. Bauer and F. D. Santis, "A differential fault attack against deterministic falcon signatures," Cryptology ePrint Archive, Paper 2023/422, 2023, https://eprint.iacr.org/2023/422. [Online]. Available: https://eprint.iacr.org/2023/422

[13] N. Bindel, J. Buchmann, and J. Kramer, "Lattice-based signature¨ schemes and their sensitivity to fault attacks," Cryptology ePrint Archive, Report 2016/415, 2016, https://eprint.iacr.org/2016/415.

[14] P. Ravi, A. Chattopadhyay, and A. Baksi, "Side-channel and faultinjection attacks over lattice-based post-quantum schemes (kyber, dilithium): Survey and new results," Cryptology ePrint Archive, Report 2022/737, 2022, https://eprint.iacr.org/2022/737.

[15] P. Ravi, B. Yang, S. Bhasin, F. Zhang, and A. Chattopadhyay, "Fiddling the twiddle constants - fault injection analysis of the number theoretic transform," IACR TCHES, vol. 2023, no. 2, pp. 447-481, 2023.

[16] NIST, "Submission Requirements and Evaluation Criteria for the Post-Quantum Cryptography Standardization Process," 2016, accessed 2023-05-09. [Online]. Available:https://csrc.nist.gov/CSRC/media/Projects/Post-Quantum-Cryptography/documents/call-for-proposals-final-dec-2016.pdf

[17] M. J. Kannwischer, J. Rijneveld, P. Schwabe, and K. Stoffelen, "pqm4: Testing and benchmarking NIST PQC on ARM cortex-M4," Cryptology ePrint Archive, Report 2019/844, 2019, https://eprint.iacr.org/2019/844.

[18] G. Seiler, T. Lepoint, B. Hess, M. Baentsch, P. Schwabe, B. Westerbaan, V. Hanquez, M. J. Kannwischer, oittaa, J. Schanck, and zanxu-blackhorse, "Dilithium reference implementation v3.1 on github," accessed 2023-04-28. [Online]. Available: https://github.com/pq-crystals/dilithium/tree/v3.1

[19] T. Pornin, "Falcon source files (reference implementation) vrfy.c," accessed 2023-05-03. [Online]. Available: https://falcon-sign.info/impl/ vrfy.c.html

[20] D. Lazar, C. Peikert, and algoidan, "Deterministic falcon implementation," https://github.com/algorand/falcon, Accessed 2022-11-17.

[21] O. M. Guillen, M. Gruber, and F. De Santis, "Low-cost setup for localized semi-invasive optical fault injection attacks - how low can we go?" in COSADE 2017, ser. LNCS, S. Guilley, Ed., vol. 10348. Springer, Heidelberg, Apr. 2017, pp. 207-222.

[22] T. Espitau, P.-A. Fouque, F. Gerard, M. Rossi, A. Takahashi, M. Ti-'bouchi, A. Wallet, and Y. Yu, "Mitaka: a simpler, parallelizable, maskable variant of falcon," Cryptology ePrint Archive, Report 2021/1486, 2021, https://eprint.iacr.org/2021/1486.

[23] C. Chuengsatiansup, T. Prest, D. Stehle, A. Wallet, and K. Xagawa, "ModFalcon: Compact signatures based on module-NTRU lattices," in ASIACCS 20, H.-M. Sun, S.-P. Shieh, G. Gu, and G. Ateniese, Eds. ACM Press, Oct. 2020, pp. 853-866.

**Claims**

1. Method for signature verification of a Dilithium signature, comprising the steps of

    - considering a message with a Dilithium signature with a scalar signature component and two vectorial signature components,
    - considering a public Dilithium key, that corresponds to the Dilithium signature, with a matrix public key component and a vectorial public key component
    - in which an
    evaluation of a difference of a product of the matrix public key component and one of the vectorial signature components and a product of a scalar quantity, depending on the scalar signature component, and the vectorial public key component is substituted by an
    evaluation of a difference of a sum of the product of the matrix public key component and the one of the vectorial signature components and a further summand in form of a random vector and a sum of the product of the scalar quantity and the vectorial public key component and the further summand .

2. Method according to claim 1, in which the random vector is a pseudo-random vector.

3. Method according to claim 1, in which the random vector is a physically derived, preferably a noise-based or noise-derived, random vector.

4. Computer program product, comprising program commands, that, when run on a computer, are configured to carry out the method according to one of the previous claims.

5. Device, comprising a processor, preferably a microprocessor, configured to carry out the method according to one of the preceding claims.

6. Device according to one of the previous claim with a computer program product according to claim 4, that is configured to run on the processor.

7. Device according to claim 5 or 6, which is an embedded device.

8. Device according to claim 5, 6 or 7, which is a manufacturing device.

9. Device according to one of the claims 5 to 8, which is a logistics device.

**10.** Device according to one of the claims 5 to 9, which is an Internet-of-things device, preferably an industrial-internet-of-things device.

TABLE I: Parameters of DILITHIUM signature verification

| NIST security level | 2 | 3 | 5 |
|---|---|---|---|
| $\gamma_1$ | $2^{17}$ | $2^{19}$ | $2^{19}$ |
| $\gamma_2$ | $(q-1)/88$ | $(q-1)/32$ | $(q-1)/32$ |
| $(k, l)$ | $(4, 4)$ | $(6, 5)$ | $(8, 7)$ |
| $\beta$ | 78 | 196 | 120 |
| $\omega$ | 80 | 55 | 75 |

Fig. 1 (State of the art)

**EP 4 521 681 A1**

| | Europäisches Patentamt European Patent Office Office européen des brevets | **EUROPEAN SEARCH REPORT** | **Application Number** EP 24 16 1763 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | RAVI PRASANNA ET AL: "Side-channel and Fault-injection attacks over Lattice-based Post-quantum Schemes (Kyber, Dilithium): Survey and New Results", ACM TRANSACTIONS ON EMBEDDED COMPUTING SYSTEMS, ACM, NEW YORK, NY, US, 5 June 2023 (2023-06-05), XP059176843, ISSN: 1539-9087, DOI: 10.1145/3603170 * Section 3, 5 * | 1-10 | INV. H04L9/30 H04L9/32 |
| A | ISLAM SAAD ET AL: "Signature Correction Attack on Dilithium Signature Scheme", 2022 IEEE 7TH EUROPEAN SYMPOSIUM ON SECURITY AND PRIVACY (EUROS&P), IEEE, 6 June 2022 (2022-06-06), pages 647-663, XP034138955, DOI: 10.1109/EUROSP53844.2022.00046 [retrieved on 2022-06-23] * Section 2, 3, 7 * | 1-10 | |
| A | LEON GROOT BRUINDERINK ET AL: "Differential Fault Attacks on Deterministic Lattice Signatures", IACR, INTERNATIONAL ASSOCIATION FOR CRYPTOLOGIC RESEARCH , vol. 20180418:202919 16 April 2018 (2018-04-16), pages 1-22, XP061025503, Retrieved from the Internet: URL:http://eprint.iacr.org/2018/355.pdf [retrieved on 2018-04-16] * Section 2, 3, 6 * | 1-10 | TECHNICAL FIELDS SEARCHED (IPC) H04L |

-/--

The present search report has been drawn up for all claims

| Place of search | Date of completion of the search | Examiner |
|---|---|---|
| Munich | 2 August 2024 | Prins, Leendert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.................................................................................
& : member of the same patent family, corresponding document

EPO FORM 1503 03.82 (P04C01)

**EP 4 521 681 A1**

Europäisches Patentamt

European Patent Office

Office européen des brevets

# EUROPEAN SEARCH REPORT

**Application Number**

EP 24 16 1763

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Shi Bai: "CRYSTALS-Dilithium - Algorithm Specification and Supporting Documentation (Version 3.1)", <br><br> , <br> 8 February 2021 (2021-02-08), XP093192101, Retrieved from the Internet: URL:https://pq-crystals.org/dilithium/data/dilithium-specification-round3-20210208.pdf <br> * Section 3, 6, Appendix C * <br> - - - - - | 1-10 | |
| | | | **TECHNICAL FIELDS SEARCHED (IPC)** |

The present search report has been drawn up for all claims

| Place of search | Date of completion of the search | Examiner |
|---|---|---|
| Munich | 2 August 2024 | Prins, Leendert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.....................................................................................
& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Seifert's RSA fault attack: Simplified analysis and generalizations. **J. A. MUIR**. ICICS 06, ser. LNCS. Springer, December 2006, vol. 4307, 420-434
- CRYSTALS-DILITHIUM. **V. LYUBASHEVSKY** ; **L. DUCAS** ; **E. KILTZ** ; **T. LEPOINT** ; **P. SCHWABE** ; **G. SEILER** ; **D. STEHLE** ; **S. BAI**. Tech. Rep.. Na-' tional Institute of Standards and Technology, 2022
- FALCON. **T. PREST** ; **P.-A. FOUQUE** ; **J. HOFF-STEIN** ; **P. KIRCHNER** ; **V. LYUBASHEVSKY** ; **T. PORNIN** ; **T. RICOSSET** ; **G. SEILER** ; **W. WHYTE** ; **Z. ZHANG**. Tech. Rep.. National Institute of Standards and Technology, 2022
- SPHINCS. **A. HULSING** ; **D. J. BERNSTEIN** ; **C. DOBRAUNIG** ; **M. EICHLSEDER** ; **S. FLUHRER** ; **S.-L. GAZDAG** ; **P. KAMPANAKIS** ; **S. KOLBL** ; **T. LANGE** ; **M. M. LAU-¨ RIDSEN**. Tech. Rep.. National Institute of Standards and Technology, 2022
- *NIST announces first four quantum-resistant cryptographic algorithms*, 21 December 2022, https://www.nist.gov/news-events/news/2022/07/nistannounces-first-four-quantum-resistant-cryptographic-algorithms
- **N. MORO** ; **K. HEYDEMANN** ; **E. ENCRENAZ** ; **B. ROBISSON**. Formal verification of a software countermeasure against instruction skip attacks. *Cryptology ePrint Archive, Report 2013/679*, 2013, https://eprint.iacr.org/2013/679
- **J.-M. DUTERTRE** ; **T. RIOM** ; **O. POTIN** ; **J.-B. RIGAUD**. *Experimental analysis of the laser-induced instruction skip fault model*, 03 May 2023, https://hal.science/hal-02 37 97 54/document
- **A. MENU** ; **J.-M. DUTERTRE** ; **O. POTIN** ; **J.-B. RIGAUD** ; **J.-L. DANGER**. *Experimental analysis of the electromagnetic instruction skip fault model*, 03 May 2023, https: //hal.science/hal-02572398/document
- On authenticated computing and rsa-based authentication. **J.-P. SEIFERT**. Proceedings of the 12th ACM Conference on Computer and Communications Security, ser. CCS '05. Association for Computing Machinery, 2005, 122-127
- **L. G. BRUINDERINK** ; **P. PESSL**. Differential fault attacks on deterministic lattice signatures. *IACR TCHES*, 2018, vol. 2018 (3), 21-43, https://tches.iacr.org/index.php/TCHES/article/view/7267
- **S. MCCARTHY** ; **J. HOWE** ; **N. SMYTH** ; **S. BRANNIGAN** ; **M. O'NEILL**. BEARZ attack FALCON: Implementation attacks with countermeasures on the FALCON signature scheme. *Cryptology ePrint Archive, Report 2019/478*, 2019, https://eprint.iacr.org/2019/478
- **S. BAUER** ; **F. D. SANTIS**. A differential fault attack against deterministic falcon signatures. *Cryptology ePrint Archive, Paper 2023/422*, 2023, https://eprint.iacr.org/2023/422. [Online]. Available: https://eprint.iacr.org/2023/422
- **N. BINDEL** ; **J. BUCHMANN** ; **J. KRAMER**. Lattice-based signature¨ schemes and their sensitivity to fault attacks. *Cryptology ePrint Archive, Report 2016/415*, 2016, https://eprint.iacr.org/2016/415
- **P. RAVI** ; **A. CHATTOPADHYAY** ; **A. BAKSI**. Side-channel and faultinjection attacks over lattice-based post-quantum schemes (kyber, dilithium): Survey and new results. *Cryptology ePrint Archive, Report 2022/737*, 2022, https://eprint.iacr.org/2022/737
- **P. RAVI** ; **B. YANG** ; **S. BHASIN** ; **F. ZHANG** ; **A. CHATTOPADHYAY**. Fiddling the twiddle constants - fault injection analysis of the number theoretic transform. *IACR TCHES*, 2023, vol. 2023 (2), 447-481
- *Submission Requirements and Evaluation Criteria for the Post-Quantum Cryptography Standardization Process*, 2016, https://csrc.nist.gov/CSRC/media/-Projects/Post-Quantum-Cryptography/documents/-call-for-proposals-final-dec-2016.pdf
- **M. J. KANNWISCHER** ; **J. RIJNEVELD** ; **P. SCHWABE** ; **K. STOFFELEN**. pqm4: Testing and benchmarking NIST PQC on ARM cortex-M4. *Cryptology ePrint Archive, Report 2019/844*, 2019, https://eprint.iacr.org/2019/844
- **G. SEILER** ; **T. LEPOINT** ; **B. HESS** ; **M. BAENTSCH** ; **P. SCHWABE** ; **B. WESTERBAAN** ; **V. HANQUEZ** ; **M. J. KANNWISCHER** ; **OITTAA, J. SCHANCK** ; **ZANXU-BLACKHORSE**. *Dilithium reference implementation v3.1 on github*, 28 April 2023, https://github.com/pq-crystals/dilithium/tree/v3.1
- **T. PORNIN**. *Falcon source files (reference implementation) vrfy.c*, 03 May 2023, https://falcon-sign.info/impl/ vrfy.c.html
- **D. LAZAR** ; **C. PEIKERT** ; **ALGOIDAN**. *Deterministic falcon implementation*, 17 November 2022, https://github.com/algorand/falcon

- Low-cost setup for localized semi-invasive optical fault injection attacks - how low can we go?. **O. M. GUILLEN** ; **M. GRUBER** ; **F. DE SANTIS**. COSADE 2017, ser. LNCS. Springer, April 2017, vol. 10348, 207-222

- **T. ESPITAU** ; **P.-A. FOUQUE** ; **F. GERARD** ; **M. ROSSI** ; **A. TAKAHASHI** ; **M. TI-' BOUCHI** ; **A. WALLET** ; **Y. YU**. Mitaka: a simpler, parallelizable, maskable variant of falcon. *Cryptology ePrint Archive, Report 2021/1486*, 2021, https://eprint.iacr.org/2021/1486
- ModFalcon: Compact signatures based on module-NTRU lattices. **C. CHUENGSATIANSUP** ; **T. PREST** ; **D. STEHLE** ; **A. WALLET** ; **K. XAGAWA**. ASIACCS 20. ACM Press, October 2020, 853-866